(19) Europäisches Patentamt
European Patent Office
Office européen des brevets

(11) **EP 3 687 051 B1**

(12) **FASCICULE DE BREVET EUROPEEN**

(45) Date de publication et mention
de la délivrance du brevet:
**19.05.2021   Bulletin 2021/20**

(51) Int Cl.:
*H02M 3/337* *(2006.01)*      *H02M 3/335* *(2006.01)*

(21) Numéro de dépôt: **20152576.3**

(22) Date de dépôt: **20.01.2020**

(54) **CONVERTISSEUR RESONANT SERIE PARALLELE LLCC**

RESONANTER LLCC-KONVERTER IN SERIE UND PARALLEL

LLCC SERIES-PARALLEL RESONANT CONVERTER

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **24.01.2019  FR 1900606**

(43) Date de publication de la demande:
**29.07.2020   Bulletin 2020/31**

(73) Titulaire: **3D Plus
78530 Buc Cedex (FR)**

(72) Inventeur: **COLONNA, Cédric
92160 ANTONY (FR)**

(74) Mandataire: **Marks & Clerk France
Immeuble "Visium"
22, avenue Aristide Briand
94117 Arcueil Cedex (FR)**

(56) Documents cités:
**US-A1- 2007 064 451     US-A1- 2009 184 698
US-A1- 2009 303 753**

• **LIN B R ET AL: "Analysis of LLC converter with
series-parallel connection", INDUSTRIAL
ELECTRONICS AND APPLICATIONS (ICIEA),
2010 THE 5TH IEEE CONFERENCE ON, IEEE,
PISCATAWAY, NJ, USA, 15 juin 2010
(2010-06-15), pages 346-351, XP031713383, ISBN:
978-1-4244-5045-9**

**Description**

Le domaine de l'invention est celui des convertisseurs de puissance résonants.

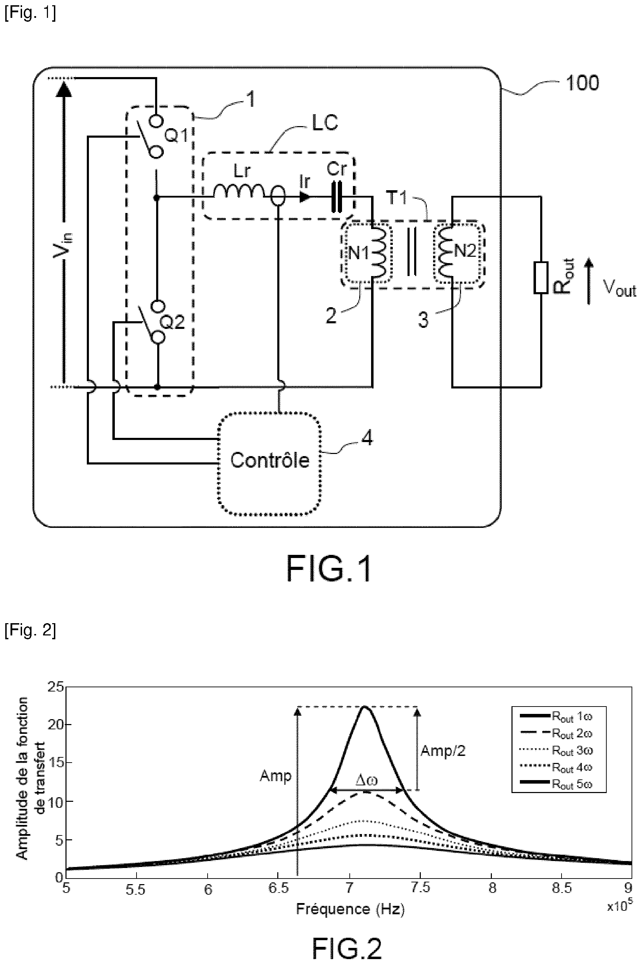

On a représenté figure 1 un convertisseur de puissance 100 résonant série classique. Il comporte :

- un onduleur 1 assuré par deux interrupteurs Q1 et Q2,

- un circuit résonant série LC avec une inductance Lr et un condensateur Cr,

- un transformateur T1 comprenant un circuit primaire 2 avec un enroulement de N1 spires et un circuit secondaire 3 avec un enroulement de N2 spires, qui permet de réaliser la fonction isolation galvanique,

- des moyens 4 de contrôle de l'onduleur. Sur la figure, la boucle autour du fil qui part vers le contrôle est dédiée à la lecture de courant ; les deux fils qui partent vers les interrupteurs sont dédiés à leur commande.

L'inductance Lr, le condensateur Cr et le circuit primaire sont en série.

Dans une structure résonnante classique, le fonctionnement est assuré à la fréquence de résonance ou pour une fréquence proche. Dans ces conditions et pour une sélectivité suffisamment grande, le courant dans la structure est de forme sinusoïdale. On parle alors d'hypothèse du premier harmonique.

Travailler avec un courant sinusoïdal présente de nombreux avantages parmi lesquels une réduction des contraintes sur le transformateur. Néanmoins, l'amplitude et la sélectivité de la résonance sont directement liées au courant dans le convertisseur et donc à l'impédance de la charge de sortie représentée sur la figure 1 par une résistance Rout.

L'onduleur 1 permet ici de hacher la tension d'entrée Vin (continue) et ainsi de générer un signal carré. Si ce signal carré est à la bonne fréquence, i.e. à la fréquence de résonance du couple Lr, Cr, le courant Ir peut être considéré purement sinusoïdal pour une sélectivité suffisamment grande. Le courant passe alors par le transformateur qui permet l'isolation galvanique et est transmis à la charge Rout.

Le fonctionnement de ce convertisseur repose sur la valeur de l'impédance. Ainsi, si on introduit Q le facteur de qualité du convertisseur à circuit résonant série décrit précédemment, on a :

[Math. 1]

$$Q = \frac{N^2}{R_{out}} \left( \frac{Lr}{Cr} \right)^{1/2}$$

avec N= N2/N1 le rapport de transformation du transformateur T1. On peut alors tracer l'évolution de l'amplitude de la fonction de transfert en fonction de la fréquence, selon l'impédance de la charge Rout afin d'en considérer les conséquences. Un exemple d'évolution de l'amplitude de la fonction de transfert est montré figure 2 pour lequel le couple L, C du circuit LC a été choisi pour résonner à 720kHz. Sur cette figure, on note Amp l'amplitude de la réponse à une tension sinusoïdale de valeur unitaire et $\Delta\omega$ la bande passante, tous deux pris à la fréquence de résonance. On observe que le facteur de qualité qui peut aussi être exprimé par le ratio Amp/ $\Delta\omega$ décroit très rapidement avec l'augmentation de l'impédance.

Les conséquences sont doubles. La première est que l'amplitude du courant transmis au secondaire décroit. Cette décroissance peut limiter la puissance effective transmise à la charge. La seconde est que l'augmentation de la bande passante joue sur les harmoniques du courant résonnant Ir. Ainsi plus la bande passante est large (moins sélective) plus Ir peut comporter d'harmoniques. Ne plus travailler dans l'hypothèse du premier harmonique a des effets sur les pertes mais aussi sur le contrôle de la structure.

Le but de l'invention est de pallier ces inconvénients.

L'invention est basée sur l'introduction d'une structure RCN acronyme de l'expression anglo-saxonne « Resistance Control Network » dans le circuit primaire du transformateur.

Plus précisément l'invention a pour objet un convertisseur de puissance à circuit résonant série qui comporte :-

- un onduleur,
- un circuit résonant série LC,
- un transformateur comprenant un circuit primaire et un circuit secondaire, et
- des moyens de contrôle de l'onduleur.

L'onduleur est relié au circuit résonant série LC qui est destiné à être connecté à une charge de sortie à travers le transformateur.

Il est principalement caractérisé en ce que le circuit primaire comporte un premier enroulement de N11 spires et un second enroulement de N12 spires avec N11=N12, une inductance Lx en parallèle du premier enroulement, un condensateur de capacité Cx en parallèle du second enroulement.

Cette solution innovante permet de contrôler la variation de l'impédance du circuit primaire afin de pouvoir borner le facteur de qualité Q.

Cette invention permet de résoudre avec un changement limité du convertisseur résonnant, un des problèmes liés à son utilisation. Par cette solution, on entend étendre d'une part la plage d'utilisation de ce type de convertisseur mais aussi améliorer ses performances et son volume.

De préférence, Lx, Cx, et l'inductance Lr du circuit résonant série LC, sont tels que

[Math. 2]

$$C_X = \frac{4}{L_R} * \frac{1}{\omega_2^2 - \omega_0^2} + \frac{1}{L_X \omega_2^2}$$

avec $\omega_2$ la pulsation de résonance à faible charge et $\omega_0$ la pulsation de résonance à forte charge.

L'onduleur peut être à demi-pont. Il peut comporter un premier interrupteur à deux quadrants et un second interrupteur à deux quadrants, l'onduleur étant configuré pour être traversé par un courant et générant une tension, et les moyens de contrôle de l'onduleur sont configurés pour retarder le courant par rapport à la tension, de manière à obtenir une commutation douce.

D'autres caractéristiques et avantages de l'invention apparaîtront à la lecture de la description détaillée qui suit, faite à titre d'exemple non limitatif et en référence aux dessins annexés dans lesquels :

Les dessins annexés illustrent l'invention :

[Fig.1] représente schématiquement un convertisseur de puissance à circuit résonant, selon l'état de la technique,

[Fig.2] représente l'évolution de l'amplitude de la fonction de transfert en fonction de la fréquence pour différentes charges Rout, pour un convertisseur selon l'état de la technique,

[Fig.3] représente schématiquement un exemple de convertisseur de puissance à circuit résonant, selon l'invention,

[Fig.4a] est une représentation schématique d'une structure RCN de base,

[Fig. 4b] illustre l'évolution de l'impédance Zin vue au primaire en fonction de la variation d'une résistance R, avec ou sans RCN,

[Fig.5] illustre l'évolution de l'amplitude de la fonction de transfert en fonction de la fréquence pour différentes charges Rout, pour un convertisseur selon l'invention,

[Fig.6] illustrent l'évolution de l'amplitude (figure 6a) et de la phase (figure 6b) de Vout/Vin, en fonction de la fréquence dans les cas de forte charge (Rout faible) et de faible charge (Rout fort), pour un convertisseur selon l'invention,

[Fig.7] représente schématiquement un autre exemple de convertisseur de puissance selon l'invention, regroupant trois possibilités.

D'une figure à l'autre, les mêmes éléments sont repérés par les mêmes références.

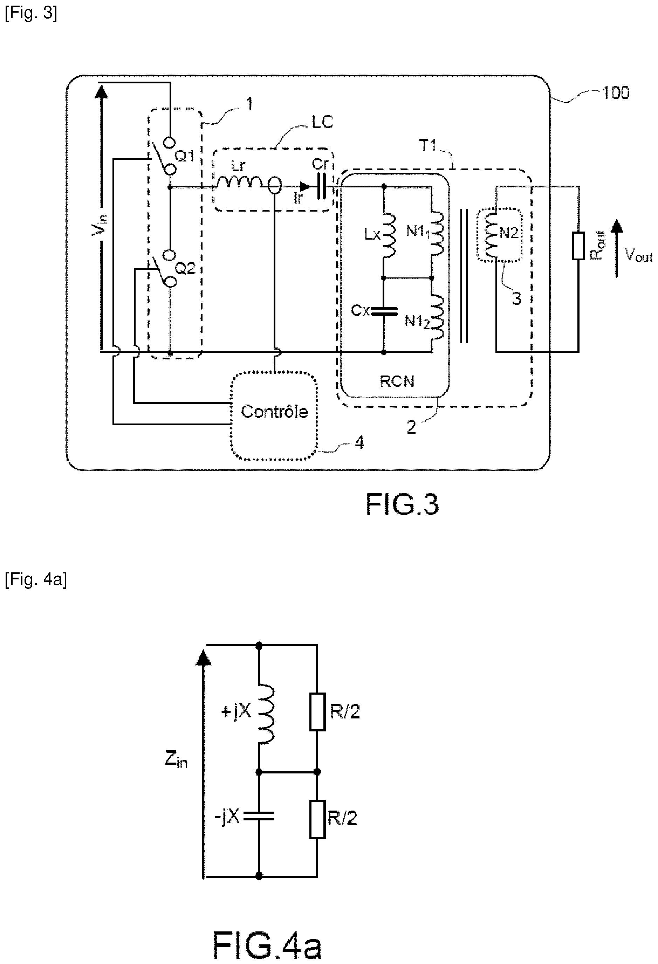

L'invention est basée sur l'introduction d'une structure RCN acronyme de l'expression anglo-saxonne « Resistance Control Network » dans le circuit primaire du transformateur, qui peut être représentée par le schéma de la figure 3.

Selon l'invention décrite en relation avec la figure 3, le circuit primaire 2 comporte :

- un premier enroulement de N11 spires et
- un second enroulement de N12 spires avec N11=N12, en série avec le premier enroulement,
- une inductance Lx en parallèle du premier enroulement ; l'inductance Lx pouvant être intégrée au premier enroulement,

- un condensateur Cx en parallèle du second enroulement.

Les impédances respectives de Lx et Cx sont +jX et -jX à fréquence donnée (on a pris pour cet exemple X =1). On désigne Vin la tension d'entrée aux bornes de l'onduleur et Vout la tension de sortie du convertisseur.

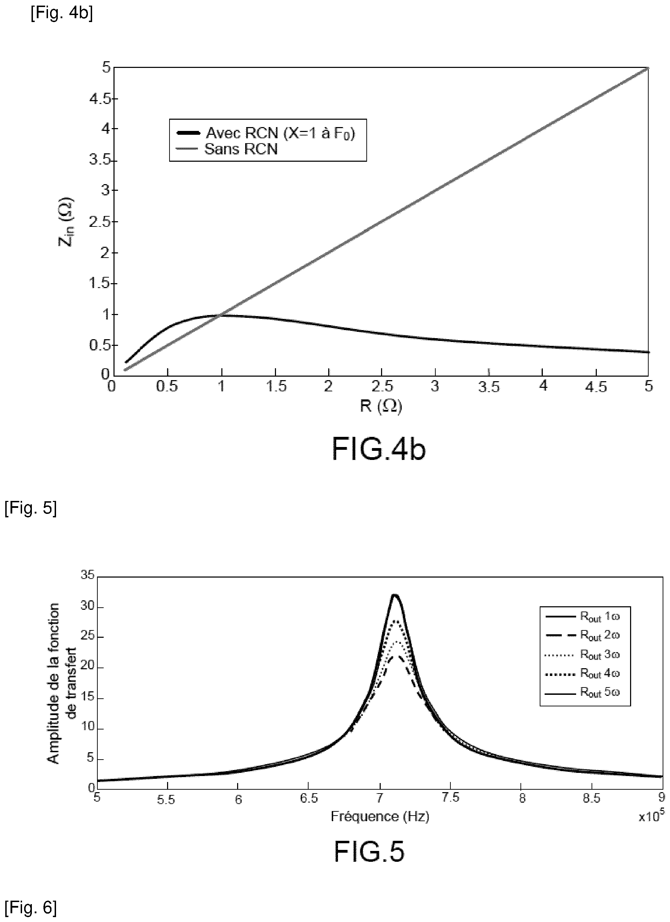

Ce circuit primaire 2 peut ainsi être représenté par une structure RCN montrée figure 4a. La figure 4b montre l'évolution de l'impédance Zin vue au primaire en fonction de la variation d'une résistance R pour les deux cas : selon l'invention (avec une structure RCN et X =1) et selon l'art antérieur (sans structure RCN).

On montre figure 5 l'évolution de l'amplitude de la fonction de transfert selon la fréquence pour différentes impédances de la charge Rout ramenée au primaire, dans le cas d'un convertisseur selon l'invention. Comme on peut le constater, la structure RCN permet ici de limiter la variation de Q (due à la variation de la charge Rout ramenée au primaire) entre deux bornes qui peuvent être déterminées. Sur la figure ces bornes sont environ 22 et 32.

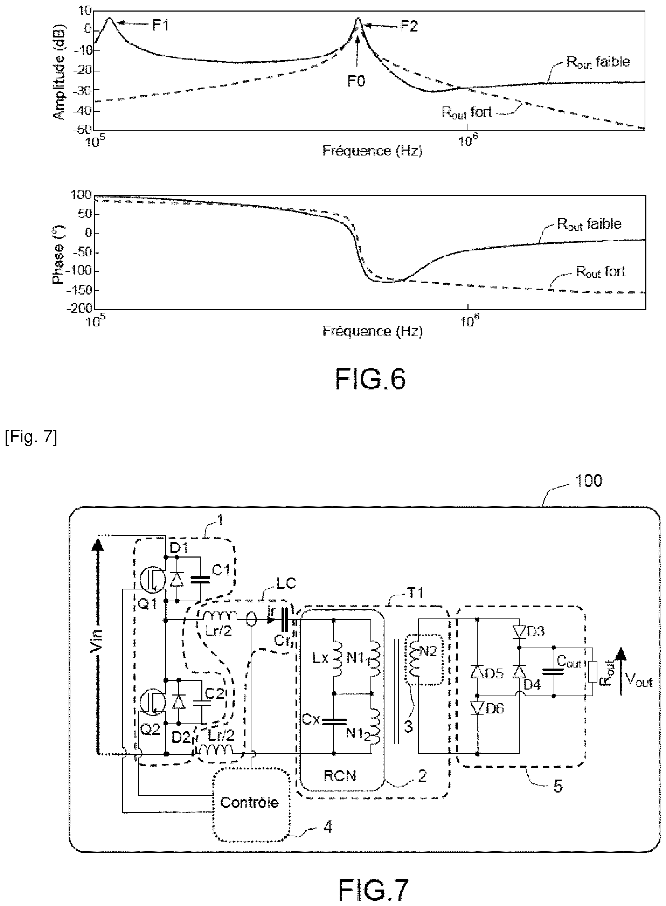

Ainsi, comme on peut le voir figure 6 quelle que soit l'impédance de la charge de sortie Rout, la structure RCN résonne (à F0 ou à F1 et F2) avec une amplitude (Amp) suffisamment grande et une sélectivité suffisante (Δω stable vis-à-vis de la variation de la charge) pour assurer le bon fonctionnement de la structure. Les tensions et les courants sont alors quasi-sinusoïdaux.

Par ailleurs, pour un dimensionnement convenable de la cellule de puissance (Cx, Lx, Lr) telle que :

[Math. 3]

$$C_X = \frac{4}{L_R} * \frac{1}{\omega_2^2 - \omega_0^2} + \frac{1}{L_X \omega_2^2}$$

avec $\omega_2$ la pulsation de résonance à faible charge (ou Rout $\rightarrow \infty$) et $\omega_0$ la pulsation de résonance à forte charge (ou Rout $\rightarrow$ 0) et Lr l'inductance du circuit résonant série LC, on peut fixer l'évolution de la fréquence de résonance en fonction de la variation de la charge Rout.

L'onduleur peut être à demi-pont, c'est-à-dire à deux interrupteurs ou à pont complet, c'est-à-dire à quatre interrupteurs, ou autre comme par exemple à multiniveaux.

Avec l'augmentation de la fréquence de fonctionnement des alimentations et de leur densité de puissance, les pertes et notamment celles par commutation dans les interrupteurs augmentent. Celles-ci sont liées au courant et à la tension dans un interrupteur commandé. Lorsque le courant et la tension dans un interrupteur commandé sont non nuls, une puissance est dissipée dans l'interrupteur. On parle alors de commutation dure ou « hard-switching ».

A contrario, lorsqu'une de ces deux composantes est nulle, la puissance dans l'interrupteur est nulle. Ce dernier cas est intéressant car il présente l'avantage de ne générer aucune perte dans l'interrupteur.

Lorsque la tension est nulle lors de la commutation, on parle de commutation zéro tension, et identiquement zéro courant quand celui-ci est nul. C'est ce que l'on appelle commutation douce ou « soft switching ».

Le convertisseur selon l'invention présente deux avantages par rapport à ce phénomène. Le premier est que la forme du courant est connue (sinusoïdale) si le système travaille à une fréquence proche de la fréquence de résonance. Le second est que la phase du courant vis-à-vis de la tension peut être contrôlée en modifiant la fréquence. Ainsi, si on s'intéresse à la figure 6 et plus précisément à l'évolution de la phase autour de la résonance, on peut s'apercevoir que la phase peut être modifiée par variation de la fréquence. Ce faisant, il est possible de se placer dans un cas de commutation douce pour les interrupteurs.

Pour cette commutation douce, on utilise un onduleur 1 est à deux interrupteurs à deux quadrants. De manière classique chaque interrupteur Q1, Q2 à deux quadrants est un interrupteur FET présentant une diode (D1 pour Q1, D2 pour Q2) en antiparallèle à l'interrupteur et présentant une capacité (C1 pour Q1, C2 pour Q2), en parallèle. Cette capacité peut être la capacité parasite de l'interrupteur ou être celle d'un condensateur ajouté comme montré sur la figure 7.

En outre, les moyens de contrôle 4 sont configurés pour retarder le courant de cet onduleur 1 par rapport à la tension générée par l'onduleur, de manière à obtenir une commutation douce.

Par extension avec ce qui a été dit précédemment, on parvient ici grâce à notre structure à travailler en commutation douce sur toute la plage de charge de l'alimentation. Ceci est un avantage, d'une part pour limiter les pertes dans les interrupteurs et donc améliorer le rendement, imposer moins de contraintes sur les moyens de contrôle de l'onduleur, et d'autre part, comme nous allons le voir limiter les perturbations EM et électriques induites par l'alimentation.

Dans le domaine du spatial, l'un des enjeux majeurs en électronique de puissance est de limiter la taille des convertisseurs. Avec l'avènement des nouveaux semi-conducteurs, les composants actifs étant fortement miniaturisés, la taille des convertisseurs est dictée par le volume des composants passifs de filtrage.

Pour respecter les normes en vigueur sur les perturbations au niveau des sources d'alimentations notamment, les convertisseurs doivent embarquer un certain nombre de filtres. Ces filtres sont souvent volumineux et sont dimensionnés en fonction des perturbations générées par l'alimentation.

La structure innovante présentée ici permet grâce à la commutation douce et à son système de contrôle de la résonance, de limiter les perturbations induites par le découpage et de contrôler les harmoniques du courant.

Ainsi, à partir de filtres dont les performances sont fixées en fonction des perturbations EM autorisées, il est possible de réduire la taille de ceux-ci.

Comme montré figure 7, le convertisseur selon l'invention peut être équipé d'un redresseur en pont de Graetz 5 : un pont redresseur (avec quatre diodes D3, D4, D5 et D6) en sortie et en parallèle du circuit secondaire 3, entre le circuit secondaire et la charge de sortie Rout.

Comme on peut aussi voir sur cette figure 7, l'inductance résonnante série Lr peut aussi être coupée en deux parties Lr1 et Lr2 avec Lr1=Lr2=Lr/2, pour limiter les courants de mode commun. Cela permet de limiter les perturbations vues au primaire tout en permettant la résonance. La première inductance Lr/2, le condensateur Cr, le circuit primaire et la seconde inductance Lr/2 qui sont en série, sont montés en parallèle du second interrupteur Q2, comme précédemment.

Les 3 modes de réalisation de l'invention décrits (pont de Graetz / interrupteurs FETs, diode et capacité / inductance Lr en deux parties), peuvent être regroupés comme montré sur cette figure, mais ce n'est pas indispensable.

**Revendications**

1. Convertisseur (100) de puissance à circuit résonant série qui comporte :

   - un onduleur (1),
   - un circuit résonant série LC,
   - un transformateur (T1) comprenant un circuit primaire (2) et un circuit secondaire (3), et
   - des moyens (4) de contrôle de l'onduleur, l'onduleur étant relié au circuit résonant série LC qui est destiné à être connecté à une charge de sortie (Rout) à travers le transformateur (T1), **caractérisé en ce que** le circuit primaire (2) comporte un premier enroulement de N11 spires et un second enroulement de N12 spires avec N11=N12, une inductance (Lx) en parallèle du premier enroulement, un condensateur de capacité Cx en parallèle du second enroulement et **en ce que** l'inductance Lx en parallèle du premier enroulement, la capacité Cx et l'inductance Lr du circuit résonant série LC, sont tels que

   [Math. 4]

   $$C_X = \frac{4}{L_R} * \frac{1}{\omega_2^2 - \omega_0^2} + \frac{1}{L_X \omega_2^2}$$

   avec $\omega_2$ la pulsation de résonance à faible charge et $\omega_0$ la pulsation de résonance à forte charge.

2. Convertisseur de puissance selon la revendication précédente, **caractérisé en ce que** l'inductance (Lx) en parallèle du premier enroulement est intégrée au premier enroulement.

3. Convertisseur de puissance selon l'une des revendications précédentes, **caractérisé en ce que** l'onduleur (1) est à demi-pont.

4. Convertisseur de puissance selon la revendication précédente, **caractérisé en ce que** l'onduleur (1) comprend un premier interrupteur (Q1) à deux quadrants et un second interrupteur (Q2) à deux quadrants, l'onduleur (1) étant configuré pour être traversé par un courant et générant une tension, et **en ce que** les moyens (4) de contrôle de l'onduleur sont configurés pour retarder le courant par rapport à la tension, de manière à obtenir une commutation douce.

5. Convertisseur de puissance selon la revendication précédente, **caractérisé en ce que** le premier interrupteur (Q1) à deux quadrants, comporte un premier condensateur de capacité C1 et le second interrupteur (Q2) comporte un second condensateur de capacité C2.

6. Convertisseur de puissance selon l'une des revendications 1 à 2, **caractérisé en ce que** l'onduleur (1) est à pont complet.

**7.** Convertisseur de puissance selon l'une des revendications précédentes, **caractérisé en ce que** l'inductance Lr du circuit résonant série LC est en deux parties, Lr1 et Lr2 avec Lr1=Lr2=Lr/2.

**8.** Convertisseur de puissance selon l'une des revendications précédentes, **caractérisé en ce qu'**il comporte un pont redresseur (5) en sortie et en parallèle du circuit secondaire (3).

**Patentansprüche**

**1.** Leistungswandler (100) mit Serienresonanzkreis, der Folgendes umfasst:

- einen Wechselrichter (1),
- einen LC-Serienresonanzkreis,
- einen Transformator (T1) mit einem Primärkreis (2) und einem Sekundärkreis (3), und
- Mittel (4) zum Steuern des Wechselrichters, wobei der Wechselrichter mit dem LC-Serienresonanzkreis verbunden ist, der zum Verbinden mit einer Ausgangslast (Rout) über den Transformator (T1) bestimmt ist, **dadurch gekennzeichnet, dass** der Primärkreis (2) Folgendes umfasst: eine erste Wicklung mit N11 Windungen und eine zweite Wicklung mit N12 Windungen, wobei N11 = N12 ist, eine Induktivität (Lx) parallel zur ersten Wicklung, einen Kondensator der Kapazität Cx parallel zur zweiten Wicklung, und dadurch, dass die Induktivität Lx parallel zur ersten Wicklung, die Kapazität Cx und die Induktivität Lr des LC-Serienresonanzkreises so sind, dass

[Gleichung 4]

$$C_X = \frac{4}{L_R} * \frac{1}{\omega_2^2 - \omega_0^2} + \frac{1}{L_X \omega_2^2}$$

wobei $\omega_2$ die Resonanzpulsation bei niedriger Last und $\omega_0$ die Resonanzpulsation bei hoher Last ist.

**2.** Leistungswandler nach dem vorherigen Anspruch, **dadurch gekennzeichnet, dass** die Induktivität (Lx) parallel zu der ersten Wicklung in die erste Wicklung integriert ist.

**3.** Leistungswandler nach einem der vorherigen Ansprüche, **dadurch gekennzeichnet, dass** der Wechselrichter (1) eine Halbbrücke ist.

**4.** Leistungswandler nach dem vorherigen Anspruch, **dadurch gekennzeichnet, dass** der Wechselrichter (1) einen ersten Zwei-Quadranten-Schalter (Q1) und einen zweiten Zwei-Quadranten-Schalter (Q2) umfasst, wobei der Wechselrichter (1) so konfiguriert ist, dass er von einem Strom durchflossen wird und eine Spannung erzeugt, und dadurch, dass die Wechselrichter-Steuermittel (4) so konfiguriert sind, dass sie den Strom in Bezug auf die Spannung verzögern, um ein sanftes Schalten zu erzielen.

**5.** Leistungswandler nach dem vorherigen Anspruch, **dadurch gekennzeichnet, dass** der erste Zwei-Quadranten-Schalter (Q1) einen ersten Kondensator der Kapazität C1 und der zweite Schalter (Q2) einen zweiten Kondensator der Kapazität C2 umfasst.

**6.** Leistungswandler nach einem der Ansprüche 1 bis 2, **dadurch gekennzeichnet, dass** der Wechselrichter (1) eine Vollbrücke ist.

**7.** Leistungswandler nach einem der vorherigen Ansprüche, **dadurch gekennzeichnet, dass** die Induktivität Lr des LC-Serienresonanzkreises aus zwei Teilen, Lr1 und Lr2, besteht, wobei Lr1=Lr2=Lr/2 ist.

**8.** Leistungswandler nach einem der vorherigen Ansprüche, **dadurch gekennzeichnet, dass** er eine Gleichrichterbrücke (5) am Ausgang und parallel zum Sekundärkreis (3) umfasst.

**Claims**

**1.** A series resonant circuit power converter (100) comprising:

- an inverter (1);
- a series LC resonant circuit;
- a transformer (T1) comprising a primary circuit (2) and a secondary circuit (3); and
- means (4) for controlling the inverter, the inverter being connected to the series LC resonant circuit that is intended to be connected to an output load (Rout) through the transformer (T1), **characterised in that** the primary circuit (2) comprises a first winding of N11 turns and a second winding of N12 turns with N11 = N12, an inductor (Lx) parallel to the first winding, a capacity capacitor Cx parallel to the second winding, and **in that** the inductor Lx parallel to the first winding, the capacitor Cx and the inductor Lr of the series LC resonant circuit are such that

[Math. 4]

$$C_X = \frac{4}{L_R} * \frac{1}{\omega_2^2 - \omega_0^2} + \frac{1}{L_X \omega_2^2},$$

with $\omega_2$ being the low-load resonant pulse and $\omega_0$ being the high-load resonant pulse.

2. The power converter as claimed in the preceding claim, **characterised in that** the inductor (Lx) parallel to the first winding is integrated in the first winding.

3. The power converter as claimed in any one of the preceding claims, **characterised in that** the inverter (1) is a half-bridge inverter.

4. The power converter as claimed in the preceding claim, **characterised in that** the inverter (1) comprises a first two-quadrant switch (Q1) and a second two-quadrant switch (Q2), the inverter (1) being configured to be traversed by a current and generating a voltage, and **in that** the means (4) for controlling the inverter are configured to delay the current in relation to the voltage, so as to obtain soft switching.

5. The power converter as claimed in the preceding claim, **characterised in that** the first two-quadrant switch (Q1) comprises a first capacitor C1 and the second switch (Q2) comprises a second capacitor C2.

6. The power converter as claimed in any one of claims 1 to 2, **characterised in that** the inverter (1) is a full-bridge inverter.

7. The power converter as claimed in any one of the preceding claims, **characterised in that** the inductor Lr of the series LC resonant circuit is in two parts, Lr1 and Lr2, with Lr1 = Lr2 = Lr/2.

8. The power converter as claimed in any one of the preceding claims, **characterised in that** it comprises a rectifier bridge (5) at the output of and parallel to the secondary circuit (3).

[Fig. 1]

FIG.1

[Fig. 2]

FIG.2

[Fig. 3]

FIG.3

[Fig. 4a]

FIG.4a

[Fig. 4b]

FIG.4b

[Fig. 5]

FIG.5

[Fig. 6]

FIG.6

[Fig. 7]

FIG.7